# EUROPÄISCHE PATENTANMELDUNG

(11) **EP 3 117 905 A1**
(43) Veröffentlichungstag der Anmeldung: **18.01.2017**
(21) Anmeldenummer: 15176787.8
(22) Anmeldetag: 15.07.2015
(51) Int. Cl.: B05B 1/04, B05B 1/34, B21B 45/02, B22D 11/124, B05B 12/12, G01F 11/02, B05C 11/10, B05B 9/04, B05B 13/04, B05B 9/047

(54) **VORRICHTUNG UND VERFAHREN ZUR HERSTELLUNG VON ZUSAMMENGEKLEBTEN BAUTEILEN**

(71) Anmelder: Lutzke Maschinen- und Anlagen GmbH, 86316 Friedberg (DE)
(72) Erfinder: AUERSWALD, Detlef, 88263 Horgenzell (DE)
(74) Vertreter: Engelhardt & Engelhardt

(57) **Zusammenfassung**

Bei einer Vorrichtung (1) zur Herstellung von verklebten schichtweise aufgebauten plattenförmigen Bauteilen (2), insbesondere von Paneelen aus Holz, Holzlaminat, Kunststoff oder einem metallischen Werkstoff bzw. von unterschiedlichen Werkstoffschichten, bestehend aus:
- einem Förderband (3) oder einer Auflageplatte, auf dem die zu verklebenden Bauteile (2) aufgelegt sind,
- einer Auftragseinrichtung (5), durch die auf die Oberfläche der Bauteile (2) Wasser oder ein sonstiges Medium (8) aufzutragen ist und
- einem Stellmotor, durch den eine Relativbewegung zwischen dem Förderband (3) und der Auftragseinrichtung (5) mit einer bestimmten Fördergeschwindigkeit einstellbar ist,

soll zum einen die exakte Menge des Mediums (8) auf die Klebestruktur in Abhängigkeit der vorherrschenden Luftfeuchtigkeits-, Temperatur- und Druckwerte aufgetragen werden können, um eine möglichst optimale Stabilität der verklebten schichtweise aufgebauten Bauteile (2) zu erreichen und zum anderen, dass die auszubringende Menge des Mediums (8) exakt dosierbar in einem vorgegebenen Druckverhältnis ausbringbar ist.

Diese Aufgabe ist dadurch gelöst, dass der Auftragseinrichtung (5) mindestens ein das aufzutragende Medium (8) aufnehmende Vorratsbehälter (11) zugeordnet ist, dass in jedem der Vorratsbehälter (11) ein Druckkolben (21) vorgesehen ist, durch den ein einstellbarer Förderdruck auf das in dem Vorratsbehälter (11) vorhandene Medium (8) einstellbar ist, und dass in jedem Vorratsbehälter (11) ein Druckkolben (21) vorgesehen ist, durch den das Medium (8) in einer vorgegebenen an die Relativbewegung angepassten Menge ausbringbar ist.

## Beschreibung

Die Erfindung bezieht sich auf eine Vorrichtung sowie auf ein Verfahren zur Herstellung von zusammengeklebten schichtweise aufgebauten Bauteilen nach den Oberbegriffen des Patentanspruches 1 und 4.

Aus der DE 3543234 C2 kann eine solche Vorrichtung mit einem entsprechenden Herstellungsverfahren entnommen werden. Die großflächigen einzelnen Schichten von Bauteilen werden hierbei entweder auf ein Förderband oder einer Auflageplatte aufgelegt und der Kleber wird meanderförmig auf die Oberfläche dieser Bauteile aufgetragen. Um die Klebeeigenschaft dieser Industriekleber zu erreichen, ist es erforderlich Wasser, Wasserdampf oder eine sonstige die Klebeeigenschaft des Industrieklebers auszulösende Feuchtigkeitspartikel aufzubringen. Sobald die entsprechende Feuchtigkeitsmenge mit der meanderförmig aufgebrachten Kleberstruktur aufgetragen ist, kann die nächste Schicht des zu verklebenden Bauteils aufgelegt werden. Nach dem Aushärten des Klebers bilden die beiden Schichten das Bauteil in Sandwichstruktur, das bspw. für den Aufbau von Wohnmobilen, Schiffen, Containern od. dgl. eingesetzt werden kann.

Da es sich hierbei um Massenartikel handelt, um beispielsweise Paneelen für Wohnmobile oder Lastwagen herzustellen, ist es erforderlich, die Relativbewegung zwischen der Auftragseinrichtung und dem Förderband bzw. zwischen der Auftragseinrichtung und der Auflageplatte möglichst groß zu bemessen, um in einer entsprechenden Zeiteinheit eine große Klebefläche herstellen zu können.

Darüber hinaus hat sich herausgestellt, dass in den Industrieanlagen oftmals unterschiedliche Feuchtigkeits- und Temperaturverhältnisse vorherrschen, die witterungsabhängig sind. In Abhängigkeit von den vorherrschenden Umgebungsparameter, Luftfeuchtigkeit, Temperatur und Druckzustand, sind daher die Wassermengen zu dosieren, um eine möglichst gute Verklebung sowie ein gerades Aushärten des Klebers zu erreichen.

Bislang werden jedoch die notwendigen Wassermengen großzügig und ohne exakte Dosierung auf die Bauteile aufgetragen. Dies führt nachteiligerweise dazu, dass die Austrocknungszeit der Bauteil länger bemessen ist und der Klebstoff auf dem Bauteil verläuft, oder dass bei zu wenig Wasseranteilen die Klebeeigenschaft des aufgebrachten Klebers nicht ausreichend ist, so dass die Bauteile nach der Verklebung keine ausreichende Stabilität oder Verbund aufweisen.

Oftmals wird zur Aufbringung des Mediums, beispielsweise Wasser, ein Schlauch verwendet, der an eine Wasserleitung angeschlossen ist. In der Wasserleitung herrschen jedoch im Verlauf eines Fertigungszeitraums unterschiedliche Druckzustände, so dass aufgrund der Druckschwankungen unterschiedliche Wassermengen aufgebracht werden.

Eine Dosierung des Mediums wird oftmals mittels eines Durchflussmessers nach dem Schwebekörper-Prinzip und einem einstellbaren Ventil ermöglicht. Hierbei hat sich als nachteilig erwiesen, dass derartige Durchflussmesser für die Anwendung zu ungenau und störungsanfällig sind, da unvermeidliche Fremdpartikel den Messwert verfälschen und eine derartige Dosierung nicht kontinuierlich und reproduzierbar einen definierten Durchfluss einstellen und bestimmen können.

Es ist daher Aufgabe der Erfindung, eine Vorrichtung und ein Verfahren der eingangs genannten Gattung derart weiterzubilden, dass zum einen die exakte Wassermenge auf die Klebestruktur in Abhängigkeit von der vorherrschenden Luftfeuchtigkeits-, Temperatur- und Druckwerte aufgetragen werden können, um eine möglichst optimale Stabilität oder Verbund der verklebten schichtweise aufgebauten Bauteile zu erreichen und zum anderen, dass die auszubringende Wassermenge exakt dosierbar in einem vorgegebenen Druckverhältnis ausbringbar ist.

Diese Aufgaben sind erfindungsgemäß durch die Merkmale der kennzeichnenden Teile der Patentansprüche 1 und 4 gelöst.

Weitere vorteilhafte Weiterbildungen ergeben sich aus den Unteransprüchen.

Dadurch, dass der Auftragseinrichtung mindestens ein das aufzutragende Medium aufnehmende Vorratsbehälter zugeordnet ist, dass in jedem der Vorratsbehälter ein Druckkolben vorgesehen ist, durch den ein einstellbarer Förderdruck auf das in dem Vorratsbehälter vorhandene Medium einstellbar ist, und dass in jedem Vorratsbehälter ein Druckkolben vorgesehen ist, durch den das Medium in einer vorgegebenen an die Relativbewegung angepassten Menge ausbringbar ist, ist erreicht, dass die Wassermenge sowohl hinsichtlich des vorherrschenden Druckes als auch hinsichtlich der Wassermenge exakt definiert auf die zu verklebenden Bauteile bzw. auf die Oberfläche eines Bauteils aufgebrachte Klebestruktur aufgetragen ist, so dass in Abhängigkeit von der vorherrschenden Temperatur und Luftfeuchtigkeit die optimale Wassermenge, die für die Klebeeigenschaft am geeignetsten ist, verwendet ist.

Darüber hinaus kann bei einer Vielzahl von Vorratsbehältern jeder Druckraum individuell befüllt bzw. mittels des Druckkolbens entleert werden, so dass auch an den Positionen, an denen keine Klebestruktur auf der Oberfläche des Bauteils vorhanden ist, beispielsweise im Bereich eines späteren Fensterns oder Türöffnungen, kein Wasser aufgetragen ist.

Ferner können die Taktzeiten zur Umrüstung des Förderbandes oder der Auflageplatte dazu verwendet werden, in den jeweiligen Druckraum des Vorratsbehälters erneut ein Medium bzw. das Wasser einzufüllen. Ausschließlich durch den von dem Druckkolben in dem Druckraum erzeugten Druck entströmt das Medium dem Druckraum, wodurch sichergestellt ist, dass eine vorgegebene Menge von Wasser bzw. Medium ausgebracht ist. Der Mediumstrahl hängt demnach nicht mehr von Druckschwankungen, beispielsweise an einem Wasseranschluss oder an von Wasserleitungen vorherrschenden Druckzuständen ab.

In der Zeichnung ist ein erfindungsgemäßes Ausführungsbeispiel einer solchen Vorrichtung dargestellt, die nachfolgend näher erläutert ist. Im Einzelnen zeigt:

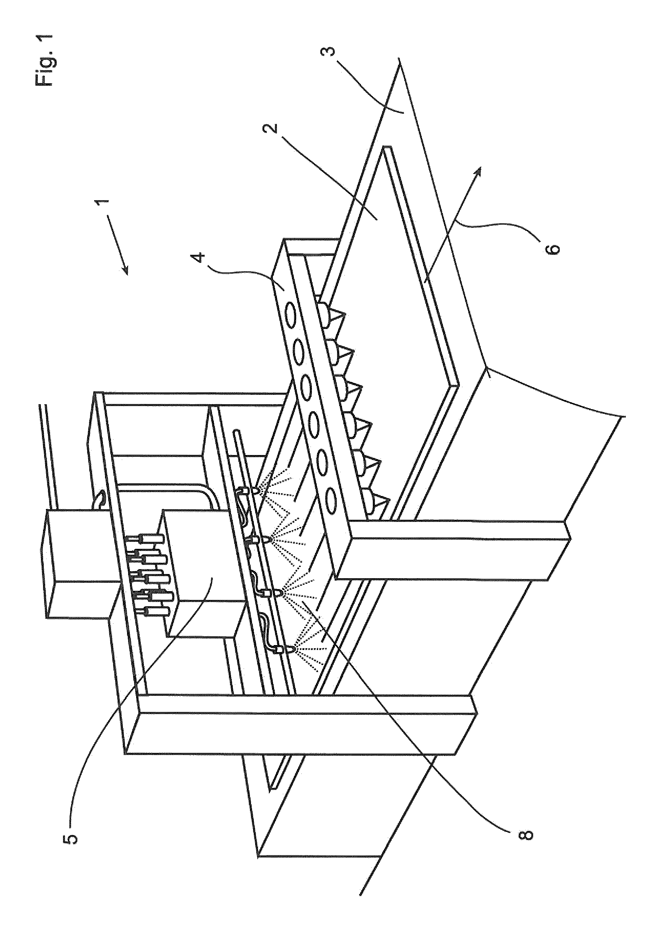

- Figur 1: eine Vorrichtung zur Ausbringung eines Mediums auf der Oberfläche eines Bauteils, das auf einem Förderband aufgelegt ist, in einer schematischen und perspektivischen Darstellung,

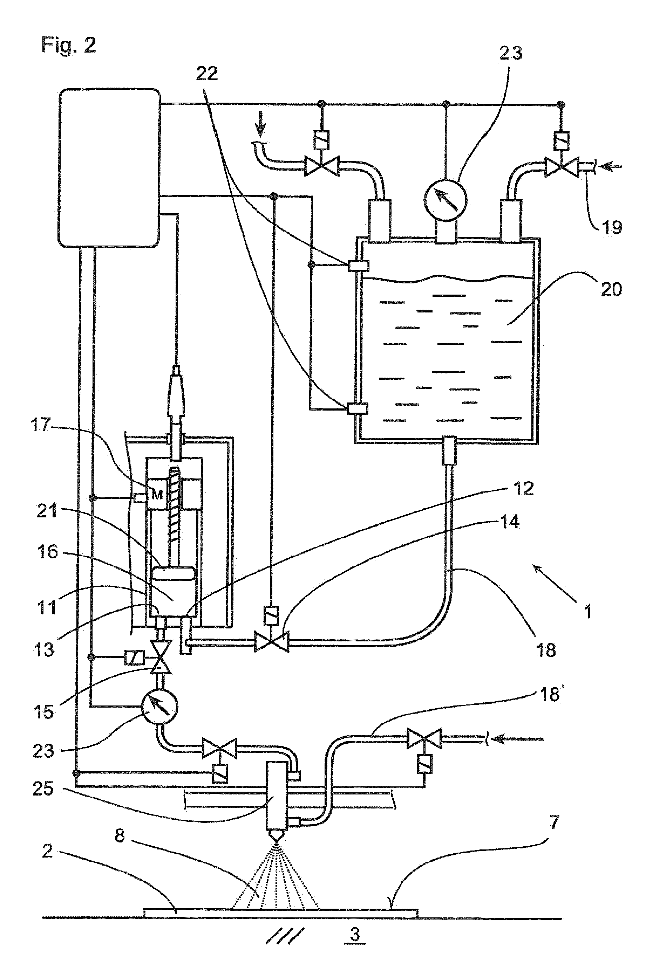

- Figur 2: einzelnen Bauteile der Vorrichtung nach Figur 1 in einer vergrößerter Wiedergabe mit einem Vorratsbehälter, in dem ein Druckraum und ein Druckkolben vorgesehen ist, ein Mediumspeicher, der mit dem Druckraum über Leitungen verbunden ist sowie dem Druckraum zugeordnete Einlass- und Auslassöffnungen, die jeweils mit einem Ventil wechselweise verschlossen sind, im Schnitt und mit den jeweiligen schematischen Wasser- bzw. Mediumanschlüssen.

Der Figur 1 ist eine Vorrichtung 1 zum Auftragen eines Medium 18 auf schichtweise aufgebauten Bauteilen 2, sogenannter Sandwich-Bauteile 2, zu entnehmen. Die Vorrichtung 1 besteht aus einem Förderband 3, das eine Zustellbewegung des darauf aufgelegten Bauteils 2 in eine Förderrichtung 6 ermöglicht, einer Klebstoff-Auftragseinheit 4, durch die der Klebstoff auf die Oberfläche 7 des Bauteils 2 meanderförmig oder flächig aufgebracht ist und einer Auftragseinrichtung 5, mittels der ein Medium 8 auf die Oberfläche 7 des Bauteils 2 und die Klebestruktur strahlenförmig aufgebracht ist.

Der schematischen Darstellung in der Figur 2 ist zu entnehmen, dass der Auftragseinrichtung 5 das Medium 8 aus einem Wasseranschluss 19 über einen Mediumspeicher 20 und Leitungen 18 durch eine Einlassöffnung 12 zugeführt ist. Die Menge des auf die Oberfläche 7 des Bauteils 2 aufzutragende Medium 8 wird in der Auftragseinrichtung 5 durch einen Vorratsbehälter 11, der einen Druckraum 16 mit einem vorgegebenen Volumen aufweist, und einen Druckkolben 21 bewerkstelligt. Der Druckkolben 21 ist durch einen Motor 17 betätigbar und durch die Bewegung des Druckkolbens 21 ist das Volumen des Druckraums 16 veränderbar. Der Druckkolben 21 ist passgenau in den Druckraum 16 des Vorratsbehälters 11 eingesetzt. Der Spalt zwischen dem Druckkolben 21 und dem Vorratsbehälter 11 ist mittels Dichtungen abgedichtet.

Der Vorratsbehälter 11 ist über die Einlassöffnung 12, eine Auslassöffnung 13 und den Leitungen 18 einerseits mit dem Mediumspeicher 20 und andererseits mit einer Düse 25 verbunden, die auf die Oberfläche 7 des Bauteils 2 gerichtet ist. Ein Einlassventil 14 und ein Auslassventil 15 regulieren dabei den Zu- und Abfluss des Mediums 8 aus dem Vorratsbehälter 11.

Die Düse 25 zerstäubt und verteilt das Medium 8 gleichmäßig auf der Oberfläche des Bauteils 2. Darüber hinaus ist an der Düse 25 eine weitere Zuführungs-Leitung 18' vorgesehen, durch diese ein Zusatzstoff dem Medium 8 vor der Zerstäubung zugemischt werden kann. Dabei kann es sich um Druckluft für die Zerstäubung des Mediums 8 handeln.

Eine Steuereinheit 9 ist elektrisch mit den Komponenten der Auftragseinrichtung 5 verbunden und steuert die Ventile der Auftragseinrichtung 5 und den Motor des Druckkolbens 21. Die Steuereinheit 9 erfasst auch eine Vielzahl von Messwerten der unterschiedlichen Sensoren 22, 23. Einerseits sind die Umgebungsbedingungen der Vorrichtung 1, beispielsweise die Umgebungstemperatur, Luftfeuchtigkeit und der Luftdruck, erfasst und andererseits die Betriebsparameter, Geschwindigkeit des Förderbandes 3, der Füllstand des Mediumspeichers 20 sowie die Druck- und Temperaturzustände des Mediums 8 in den Leitungen 18. Anhand der Messwerte berechnet die Steuereinheit 9 die Verfahrgeschwindigkeit des Druckkolbens 21 in dem Druckraum 16 des Vorratsbehälters 11. Dadurch ist für jede Oberfläche 7 eines Bauteils 2 und bei allen denkbaren klimatischen Bedingungen die optimale Auftragsmenge des Mediums 8 einstellbar.

Die Steuereinheit 9 berechnet anhand der Messwerte und Benutzereingaben die Verfahrgeschwindigkeit des Motors 17 bzw. des Druckkolbens 21 und stellt somit den Volumenstrom des Mediums 8 ein, der über die Düse 25 auf die Oberfläche 7 des Bauteils 2 aufgetragen ist. Durch die Zustellbewegung des Druckkolbens 21 ist das Volumen bzw. der Druck des Mediums 8 in dem Vorratsbehälter 1 verändert, so dass das Medium 8 durch die Auslassöffnung 13 und das geöffnete Auslassventil 15 in Richtung der Düse 25 ausströmt. Das derweil geschlossene Einlassventil 14 verhindert eine Rückströmung des Mediums 8 durch die Einlassöffnung 14 in den Mediumspeicher 20. Nach dem Abschluss des Auftragsvorganges ist das Auslassventil 15 geschlossen und das Einlassventil 14 geöffnet. Der Druckkolben 21 ist durch den Motor 17 in die Ausgangsstellung zurückgefahren und der Vorratsbehälter 11 ist erneut vollständig mit dem Medium 8 befüllt.

Der Druckkolben 21 kann hydraulisch oder pneumatisch betätigt werden. Vorteilhafterweise ist der Druckkolben 21 durch einen Linearantrieb oder Schrittmotor angetrieben, wodurch die Bewegung des Druckkolbens 21 und die Verfahrgeschwindigkeit des Druckkolbens 21 präzise einstellbar sind.

Der Mediumspeicher 20 ist mittels Leitungen 18 mit dem Vorratsbehälter 11 verbunden. Um ein rasches Nachfüllen des Vorratsbehälters 11 zu gewährleisten, kann der Druck in dem Mediumspeicher 20 eingestellt sein. Darüber hinaus kann der Vorratsbehälter 11 auch direkt mit dem Wasseranschluss 18 verbunden sein.

In der Auftragseinrichtung 5 können ein oder mehrere Vorratsbehälter 11 mit jeweils durch die Steuereinheit 9 oder unabhängig angesteuerten Druckkolben 21 vorgesehen sein. Der jeweilige Vorratsbehälter 11 kann mehrere Einlassöffnungen 12 und Auslassöffnungen 13 aufweisen.

Der Vorratsbehälter 11 und der Druckkolben 21 können auch nach dem Zweiwege-Prinzip betrieben sein. Somit wird durch eine Betätigung des Druckkolbens 21 in jede der möglichen Verfahrrichtungen des Druckkolbens 21 ein Volumenstrom des Mediums 8 erzeugt werden und das Medium 8 auf das Bauteil 2 aufgetragen werden.

Auch kann nur eine Einlassöffnung 12 oder eine Auslassöffnung 13 an dem Vorratsbehälter 11 angeordnet sein. Der Vorratsbehälter 11 ist demnach mit einem T-Stück an die jeweiligen Leitungen 18 angeschlossen. Das Einlassventil 14 und Auslassventil 15 können auch als Dreiwegeventil zusammengefasst sein.

## Patentansprüche

1. Vorrichtung (1) zur Herstellung von verklebten schichtweise aufgebauten plattenförmigen Bauteilen, insbesondere von Paneelen aus Holz, Holzlaminat, Kunststoff oder einem metallischen Werkstoff bzw. von unterschiedlichen Werkstoffschichten,
bestehend aus:
- einem Förderband (3) oder einer Auflageplatte, auf dem die zu verklebenden Bauteile (2) aufgelegt sind,
- einer Auftragseinrichtung (5), durch die auf die Oberfläche der Bauteile (2) Wasser oder ein sonstiges Medium (8) aufzutragen ist und
- einem Stellmotor, durch den eine Relativbewegung zwischen dem Förderband (3) und der Auftragseinrichtung (5) mit einer bestimmten Fördergeschwindigkeit einstellbar ist,
**dadurch gekennzeichnet,**
**dass** der Auftragseinrichtung (5) mindestens ein das aufzutragende Medium (8) aufnehmende Vorratsbehälter (11) zugeordnet ist, dass in jedem der Vorratsbehälter (11) ein Druckkolben (21) vorgesehen ist, durch den ein einstellbarer Förderdruck auf das in dem Vorratsbehälter (11) vorhandene Medium (8) einstellbar ist, und dass in jedem Vorratsbehälter (11) ein Druckkolben (21) vorgesehen ist, durch den das Medium (8) in einer vorgegebenen an die Relativbewegung angepassten Menge ausbringbar ist.

2. Vorrichtung (1) nach Anspruch 1,
**dadurch gekennzeichnet,**
**dass** der Vorratsbehälter (11) der Auftragseinrichtung (5) eine Einlassöffnung (12) und eine Auslassöffnung (13) vorgesehen ist, und dass die Einlassöffnung (12) und die Auslassöffnung (13) jeweils mit einem Ventil (14, 15) wechselweise verschließbar sind.

3. Vorrichtung (1) nach Anspruch 1 oder 2,
**dadurch gekennzeichnet,**
**dass** der Vorratsbehälter (11) der Auftragseinrichtung (5) über eine Leitung (18) mit einem Wasseranschluss (19) oder einem externen Mediumspeicher (20) verbunden ist.

4. Verfahren zur Dosierung eines Mediums (8) auf die Oberfläche (7) eines Bauteils (2), insbesondere auf eine Paneele, auf dessen oberflächlich vorzugsweise eine neanderförmig aufgetragene Klebeschicht vorhanden ist,
**gekennzeichnet durch** die Verfahrensschritte:
definiertes Auftragen des Mediums (8) in Abhängigkeit von der Umgebungstemperatur und der Luftfeuchtigkeit der Umgebung mittels einer Auftragseinrichtung (5) in einer vorgegebenen Menge des aufzubringenden Mediums (8) zur Erzeugung der optimalen Klebewirkung der Klebeschicht.
